# FASCICULE DE BREVET EUROPEEN

(11) **EP 4 108 521 B1**
(45) Date de publication et mention de la délivrance du brevet: **08.05.2024**
(21) Numéro de dépôt: 22180262.2
(22) Date de dépôt: 21.06.2022
(51) Int. Cl.: B60N 2/815, B60N 2/818, B60N 2/865, B60N 2/894

(54) **APPUI-TÊTE DE SIÈGE DE VÉHICULE AUTOMOBILE**
KOPFSTÜTZE FÜR KRAFTFAHRZEUGSITZ
HEADREST FOR A MOTOR VEHICLE SEAT

(30) Priorité: 22.06.2021 FR 2106632
(43) Date de publication de la demande: 28.12.2022
(73) Titulaire: TESCA France, 75008 Paris (FR)
(72) Inventeur: GEORGES, Laurent, 08190 Roizy (FR)
(74) Mandataire: Sayettat, Julien Christian

(56) Documents cités:
- EP-A1- 3 153 347
- EP-A1- 3 616 984

## Description

L'invention concerne un appui-tête de siège de véhicule automobile.

Il est connu, par exemple selon les documents EP 3 153 347 A1 ou EP 3 616 984 A1, de réaliser un appui-tête de siège de véhicule automobile, ledit appui-tête comprenant :
- une armature de montage sur un dossier dudit siège, ladite armature comprenant deux tiges parallèles s'étendant verticalement,
- un corps principal monté en coulissement sur lesdites tiges de manière à pouvoir adopter une pluralité de positions de réglage vertical,
- un premier dispositif de verrouillage dudit corps principal dans la position de réglage choisie,
- un corps secondaire monté en coulissement longitudinal sur ledit corps principal, de sorte que ledit corps secondaire puisse adopter une pluralité de positions de réglage longitudinal,
- un deuxième dispositif de verrouillage dudit corps secondaire dans la position de réglage choisie, ledit dispositif comprenant un loquet monté en coulissement vertical sur ledit corps principal entre une position de verrouillage, où il coopère avec une crémaillère de verrouillage s'étendant longitudinalement sur ledit corps secondaire, et une position de déverrouillage, où il s'écarte de ladite crémaillère pour libérer le coulissement dudit corps secondaire,
- une traverse commune de déverrouillage desdits dispositifs, ladite traverse étant montée en coulissement transversal sur ledit corps principal, ladite traverse présentant une extrémité pourvue d'un bouton permettant son actionnement en déverrouillage, de manière à libérer le coulissement desdits corps principal et secondaire,
- un moyen ressort de renvoi de ladite traverse en position de verrouillage.

Les agencements connus présentent généralement une certaine complexité, liée notamment à l'utilisation de composants multiples, mettant par exemple en oeuvre un ressort de renvoi du loquet en position de verrouillage, la présence dudit ressort induisant en outre la nécessité de déployer un effort additionnel pour réaliser le déverrouillage des dispositifs de verrouillage.

En outre, le verrouillage du corps secondaire peut s'avérer de robustesse insuffisante en cas de choc violent d'une tête de passager sur l'appui-tête, ce qui peut s'avérer dangereux.

L'invention a pour but de pallier ces inconvénients.

A cet effet, l'invention propose un appui-tête de siège de véhicule automobile, ledit appui-tête comprenant :
- une armature de montage sur un dossier dudit siège, ladite armature comprenant deux tiges parallèles s'étendant verticalement,
- un corps principal monté en coulissement sur lesdites tiges de manière à pouvoir adopter une pluralité de positions de réglage vertical,
- un premier dispositif de verrouillage dudit corps principal dans la position de réglage choisie,
- un corps secondaire monté en coulissement longitudinal sur ledit corps principal, de sorte que ledit corps secondaire puisse adopter une pluralité de positions de réglage longitudinal,
- un deuxième dispositif de verrouillage dudit corps secondaire dans la position de réglage choisie, ledit dispositif comprenant un loquet monté en coulissement vertical sur ledit corps principal entre une position de verrouillage, où il coopère avec une crémaillère de verrouillage s'étendant longitudinalement sur ledit corps secondaire, et une position de déverrouillage, où il s'écarte de ladite crémaillère pour libérer le coulissement dudit corps secondaire,
- une traverse commune de déverrouillage desdits dispositifs, ladite traverse étant montée en coulissement transversal sur ledit corps principal, ladite traverse présentant une extrémité pourvue d'un bouton permettant son actionnement en déverrouillage, de manière à libérer le coulissement desdits corps principal et secondaire,
- un moyen ressort de renvoi de ladite traverse en position de verrouillage,
ledit appui-tête présentant en outre les caractéristiques suivantes :
- ladite traverse est pourvue d'une crémaillère d'actionnement,
- un pignon est monté en rotation sur ledit corps principal selon un axe longitudinal, ledit pignon engrenant avec ladite crémaillère d'actionnement, ledit pignon étant pourvu d'un premier et d'un deuxième excentriques,
- ledit loquet est pourvu d'une fenêtre présentant un bord supérieur et un bord inférieur, lesdits excentriques étant positionnés de sorte que :
   o ledit premier excentrique se met en appui contre ledit bord inférieur quand ladite traverse est en position de verrouillage, de manière à bloquer ledit loquet en position de verrouillage,
   o ledit deuxième excentrique se met en appui contre ledit bord supérieur quand ladite traverse est actionnée en déverrouillage, de manière à écarter ledit loquet pour le mettre en position de déverrouillage.

Dans cette description, les termes de positionnement dans l'espace (longitudinal, transversal, vertical, horizontal, supérieur, inférieur,...) sont pris en référence à l'appui-tête disposé dans le véhicule en situation d'utilisation.

Avec l'agencement proposé, on simplifie ce qui était connu de l'art antérieur, notamment en supprimant le ressort de renvoi du loquet en position de verrouillage, le renvoi dudit loquet étant réalisé par le premier excentrique prenant appui contre le bord inférieur, la suppression dudit ressort induisant en outre une diminution de l'effort à appliquer pour réaliser le déverrouillage des dispositifs de verrouillage.

En outre le verrouillage du corps secondaire présente une grande robustesse, ceci au moyen de l'appui effectué par le premier excentrique contre le bord inférieur, ledit appui empêchant un retrait non voulu du loquet de la crémaillère de verrouillage.

D'autres particularités et avantages de l'invention apparaîtront dans la description qui suit, faite en référence aux figures jointes, dans lesquelles :

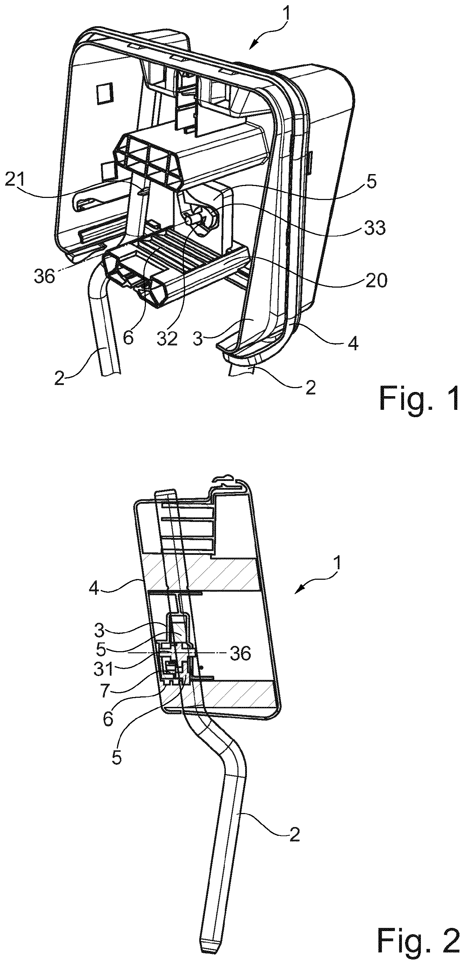

[Fig.1] est une vue schématique en perspective écorchée partielle d'un appui-tête selon une réalisation,
[Fig.2] est une vue schématique en coupe verticale partielle de l'appui-tête de la figure 1, le loquet étant en position de verrouillage,

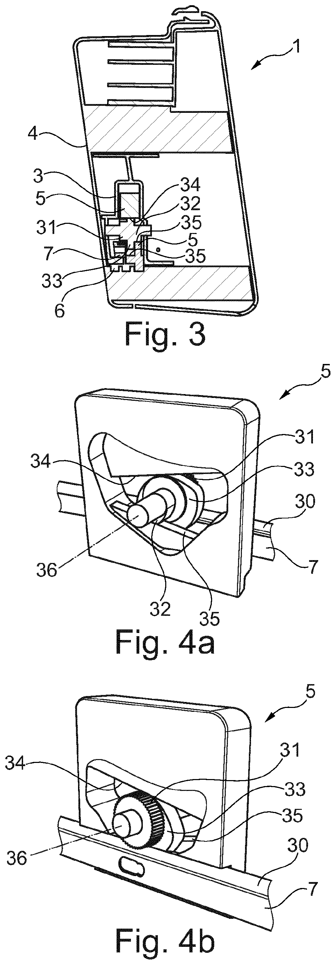

[Fig.3] est une vue partielle agrandie de la figure 2,
[Fig.4a] et
[Fig.4b] sont des vues en perspective partielle selon deux faces opposées d'un détail de l'appui-tête des figures précédentes,
[Fig.5a] et

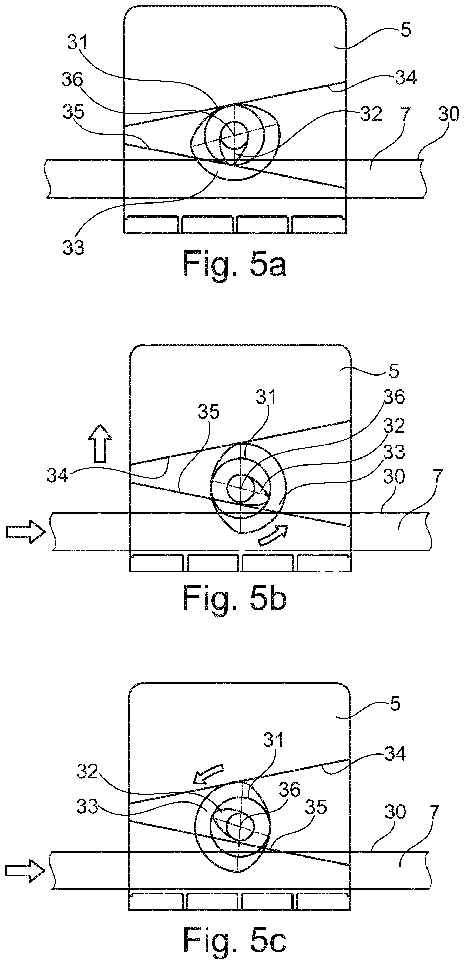

[Fig.5b] sont des vues schématique partielles, selon une direction longitudinale, de l'appui-tête des figures précédentes, le pignon n'étant pas actionné en rotation par la traverse (figure 5a), étant actionné partiellement en rotation par déplacement de ladite traverse selon un premier tronçon de course (figure 5b), de manière à relever le loquet en position de déverrouillage, et étant actionné complètement en rotation par continuation du déplacement de ladite traverse selon un deuxième tronçon de course, de manière à désactiver le premier dispositif de verrouillage tout en laissant ledit loquet en position de déverrouillage,

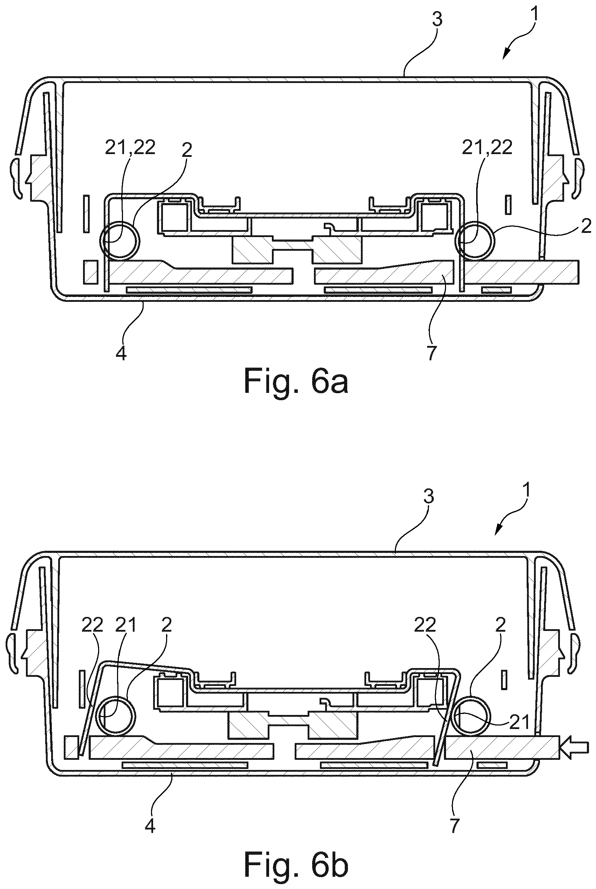

[Fig.6a] et
[Fig.6b] sont des vues schématiques partielles en coupe horizontale de l'appui-tête des figures précédentes, le premier dispositif de verrouillage étant activé (figure 6a) et désactivé (figure 6b).

En référence aux figures, on décrit un appui-tête 1 de siège de véhicule automobile, ledit appui-tête comprenant :
- une armature de montage sur un dossier dudit siège, ladite armature comprenant deux tiges 2 parallèles s'étendant verticalement,
- un corps principal 3 - notamment en matériau plastique moulé - monté en coulissement sur lesdites tiges de manière à pouvoir adopter une pluralité de positions de réglage vertical,
- un premier dispositif de verrouillage dudit corps principal dans la position de réglage choisie,
- un corps secondaire 4 - notamment en matériau plastique moulé - monté en coulissement longitudinal sur ledit corps principal, de sorte que ledit corps secondaire puisse adopter une pluralité de positions de réglage longitudinal,
- un deuxième dispositif de verrouillage dudit corps secondaire dans la position de réglage choisie, ledit dispositif comprenant un loquet 5 monté en coulissement vertical sur ledit corps principal entre une position de verrouillage, où il coopère avec une crémaillère de verrouillage 6 s'étendant longitudinalement sur ledit corps secondaire, et une position de déverrouillage, où il s'écarte de ladite crémaillère pour libérer le coulissement dudit corps secondaire,
- une traverse 7 commune de déverrouillage desdits dispositifs, ladite traverse étant montée en coulissement transversal sur ledit corps principal, ladite traverse présentant une extrémité pourvue d'un bouton - notamment sous forme de bouton poussoir ou de bouton rotatif non représentés - permettant son actionnement en déverrouillage, de manière à libérer le coulissement desdits corps principal et secondaire,
- un moyen ressort de renvoi de ladite traverse en position de verrouillage,
ledit appui-tête présentant en outre les caractéristiques suivantes :
- ladite traverse est pourvue d'une crémaillère d'actionnement 30,
- un pignon 31 est monté en rotation sur ledit corps principal selon un axe longitudinal 36, ledit pignon engrenant avec ladite crémaillère d'actionnement, ledit pignon étant pourvu d'un premier 32 et d'un deuxième 33 excentriques,
- ledit loquet est pourvu d'une fenêtre présentant un bord supérieur 34 et un bord inférieur 35, lesdits excentriques étant positionnés de sorte que :
   o ledit premier excentrique se met en appui contre ledit bord inférieur quand ladite traverse est en position de verrouillage, de manière à bloquer ledit loquet en position de verrouillage,
   o ledit deuxième excentrique se met en appui contre ledit bord supérieur quand ladite traverse est actionnée en déverrouillage, de manière à écarter ledit loquet pour le mettre en position de déverrouillage.

Selon la réalisation représentée :
- la traverse 7 est actionnable en déverrouillage selon un premier (figure 5b) et un deuxième (figure 5c) tronçon de course successifs,
- le deuxième excentrique 33 est agencé de manière à :
   o disposer le loquet 5 en position de déverrouillage après que la traverse 7 ait été actionnée sur ledit premier tronçon,
   o et à laisser ledit loquet dans ladite position quand ladite traverse est ensuite actionnée sur ledit deuxième tronçon,
- le premier dispositif de verrouillage est agencé de manière à se désactiver quand ladite traverse arrive en fin de course en extrémité dudit deuxième tronçon.

De la sorte, l'utilisateur peut accéder au réglage de la position du corps secondaire 4, par actionnement partiel de la traverse 7 en coulissement, et ceci sans débloquer le coulissement du corps principal 3.

Il peut être prévu dans ce cas un « point dur » dans le coulissement de la traverse 7 une fois réalisée la désactivation du deuxième dispositif de verrouillage - par exemple par passage de ladite traverse 7 contre un plot élastiquement rétractable - afin d'alerter l'utilisateur ne souhaitant pas accéder en outre au réglage de la position du corps principal 3.

Le premier dispositif de verrouillage se désactivant quand la traverse 7 arrive en fin de course, l'utilisateur peut alors accéder au réglage de la position du corps principal 3 en même temps que celui du corps secondaire 4.

En variante non représentée :
- la traverse 7 est actionnable en déverrouillage selon un premier et un deuxième tronçon de course successifs,
- le deuxième excentrique 33 est agencé de manière à :
   o disposer le loquet 5 en position de déverrouillage après que la traverse 7 ait été actionnée sur ledit premier tronçon, de manière à permettre le réglage du corps secondaire 4 après un coulissement partiel de ladite traverse,
   o et à ramener ledit loquet dans sa position de verrouillage quand ladite traverse est ensuite actionnée en fin de course en extrémité dudit deuxième tronçon,
- le premier dispositif de verrouillage est agencé de manière à se désactiver quand ladite traverse arrive en fin de course en extrémité dudit deuxième tronçon, le coulissement dudit corps secondaire étant bloquée quand on règle la position du corps principal 3, ce qui peut faciliter le réglage de l'appui-tête 1.

Selon la réalisation représentée, les excentriques 32,33 sont décalés l'un de l'autre selon l'axe de rotation 36 du pignon 31.

En variante non représentée, les excentriques 32,33 sont disposés sur la même cote selon l'axe de rotation 36.

Selon la réalisation représentée, les bords supérieur 34 et inférieur 35 sont sous forme de pans inclinés par rapport à l'horizontale de manière à limiter les frottements et faciliter l'actionnement en déverrouillage du loquet 5.

Selon la réalisation représentée, la crémaillère de verrouillage 6 est disposée sur un organe de guidage 20 en coulissement du corps secondaire 4 sur le corps principal 3, ledit organe étant ici sous forme de tenon intégré audit corps secondaire, ledit tenon coulissant dans une mortaise prévue dans ledit corps principal.

Selon la réalisation représentée, le premier dispositif de verrouillage comprend :
- une pluralité de crans 21 de verrouillage s'étageant verticalement sur au moins une des tiges 2 de manière à définir une tige crantée,
- au moins une saillie 22 de verrouillage montée mobile par rapport au corps principal 3 entre une position de verrouillage, où ladite saillie s'insère dans un desdits crans, et une position de déverrouillage, où ladite saillie se retire dudit cran afin de libérer le coulissement dudit corps.

Selon la réalisation représentée, les deux tiges 2 sont crantées, les saillies 22 de verrouillage étant issues d'un fil en métal à ressort dont les parties extrêmes sont repliées de manière à former lesdites saillies, l'actionnement de ladite traverse en déverrouillage opérant un appui sur lesdites parties pour déformer ledit fil et dégager lesdites saillies des crans 21 de verrouillage.

Dans une telle réalisation, le moyen ressort de renvoi de la traverse 7 en position de verrouillage peut être formé uniquement par le fil en métal à ressort, ledit fil retournant à l'état non déformé quand ladite traverse n'est pas actionnée en déverrouillage.

## Revendications

1. Appui-tête (1) de siège de véhicule automobile, ledit appui-tête comprenant :
• une armature de montage sur un dossier dudit siège, ladite armature comprenant deux tiges (2) parallèles s'étendant verticalement,
• un corps principal (3) monté en coulissement sur lesdites tiges de manière à pouvoir adopter une pluralité de positions de réglage vertical,
• un premier dispositif de verrouillage dudit corps principal dans la position de réglage choisie,
• un corps secondaire (4) monté en coulissement longitudinal sur ledit corps principal, de sorte que ledit corps secondaire puisse adopter une pluralité de positions de réglage longitudinal,
• un deuxième dispositif de verrouillage dudit corps secondaire dans la position de réglage choisie, ledit dispositif comprenant un loquet (5) monté en coulissement vertical sur ledit corps principal entre une position de verrouillage, où il coopère avec une crémaillère de verrouillage (6) s'étendant longitudinalement sur ledit corps secondaire, et une position de déverrouillage, où il s'écarte de ladite crémaillère pour libérer le coulissement dudit corps secondaire,
• une traverse (7) commune de déverrouillage desdits dispositifs, ladite traverse étant montée en coulissement transversal sur ledit corps principal, ladite traverse présentant une extrémité pourvue d'un bouton permettant son actionnement en déverrouillage, de manière à libérer le coulissement desdits corps principal et secondaire,
• un moyen ressort de renvoi de ladite traverse en position de verrouillage,
ledit appui-tête étant **caractérisé en ce que** :
• ladite traverse est pourvue d'une crémaillère d'actionnement (30),
• un pignon (31) est monté en rotation sur ledit corps principal selon un axe longitudinal (36), ledit pignon engrenant avec ladite crémaillère d'actionnement, ledit pignon étant pourvu d'un premier (32) et d'un deuxième (33) excentriques,
• ledit loquet est pourvu d'une fenêtre présentant un bord supérieur (34) et un bord inférieur (35), lesdits excentriques étant positionnés de sorte que :
o ledit premier excentrique se met en appui contre ledit bord inférieur quand ladite traverse est en position de verrouillage, de manière à bloquer ledit loquet en position de verrouillage,
o ledit deuxième excentrique se met en appui contre ledit bord supérieur quand ladite traverse est actionnée en déverrouillage, de manière à écarter ledit loquet pour le mettre en position de déverrouillage.

2. Appui-tête selon la revendication 1, **caractérisé en ce que** la traverse (7) est actionnable en déverrouillage selon un premier et un deuxième tronçon de course successifs.

3. Appui-tête selon la revendication 2, **caractérisé en ce que** :
• le deuxième excentrique (33) est agencé de manière à :
o disposer le loquet (5) en position de déverrouillage après que la traverse (7) ait été actionnée sur ledit premier tronçon,
o et à laisser ledit loquet dans ladite position quand ladite traverse est ensuite actionnée sur ledit deuxième tronçon,
• le premier dispositif de verrouillage est agencé de manière à se désactiver quand ladite traverse arrive en fin de course en extrémité dudit deuxième tronçon.

4. Appui-tête selon la revendication 2, **caractérisé en ce que** :
• le deuxième excentrique (33) est agencé de manière à :
o disposer le loquet (5) en position de déverrouillage après que la traverse (7) ait été actionnée sur ledit premier tronçon, de manière à permettre le réglage du corps secondaire (4) après un coulissement partiel de ladite traverse,
∘ et à ramener ledit loquet dans sa position de verrouillage quand ladite traverse est ensuite actionnée en fin de course en extrémité dudit deuxième tronçon,
• le premier dispositif de verrouillage est agencé de manière à se désactiver quand ladite traverse arrive en fin de course en extrémité dudit deuxième tronçon, le coulissement dudit corps secondaire étant bloquée quand on règle la position du corps principal (3).

5. Appui-tête selon l'une quelconque des revendications précédentes, **caractérisé en ce que** les excentriques (32,33) sont décalés l'un de l'autre selon l'axe de rotation (36) du pignon (31).

6. Appui-tête selon l'une quelconque des revendications précédentes, **caractérisé en ce que** les bords supérieur (34) et inférieur (35) sont sous forme de pans inclinés par rapport à l'horizontale de manière à limiter les frottements et faciliter l'actionnement en déverrouillage du loquet (5).

7. Appui-tête selon l'une quelconque des revendications précédentes, **caractérisé en ce que** la crémaillère de verrouillage (6) est disposée sur un organe de guidage (20) en coulissement du corps secondaire (4) sur le corps principal (3).

8. Appui-tête selon l'une quelconque des revendications précédentes, **caractérisé en ce que** le premier dispositif de verrouillage comprend :
• une pluralité de crans (21) de verrouillage s'étageant verticalement sur au moins une des tiges (2) de manière à définir une tige crantée,
• au moins une saillie (22) de verrouillage montée mobile par rapport au corps principal (3) entre une position de verrouillage, où ladite saillie s'insère dans un desdits crans, et une position de déverrouillage, où ladite saillie se retire dudit cran afin de libérer le coulissement dudit corps.

## Patentansprüche

1. Kopfstütze (1) für einen Kraftfahrzeugsitz, wobei die Kopfstütze umfasst:
- einen Rahmen zur Montage an einer Rückenlehne des Sitzes, wobei der Rahmen zwei parallele Stangen (2) umfasst, die sich vertikal erstrecken,
- einen Hauptkörper (3), der gleitend an den Stangen montiert ist, um eine Vielzahl von vertikalen Einstellpositionen einnehmen zu können,
- eine erste Vorrichtung zum Verriegeln des Hauptkörpers in der gewählten Einstellposition,
- einen Sekundärkörper (4), der längs gleitend so am Hauptkörper montiert ist, dass der Sekundärkörper eine Vielzahl von Längseinstellpositionen einnehmen kann,
- eine zweite Vorrichtung zum Verriegeln des Sekundärkörpers in der gewählten Einstellposition, wobei die Vorrichtung eine Klinke (5) umfasst, die zwischen einer Verriegelungsposition, in der sie mit einer Verriegelungszahnstange (6) zusammenwirkt, die sich längs am Sekundärkörper erstreckt, und einer Entriegelungsposition, in der sie sich von der Zahnstange beabstandet, um das Gleiten des Sekundärkörpers freizugeben, vertikal gleitend am Hauptkörper montiert ist,
- eine gemeinsame Querstrebe (7) zum Entriegeln der Vorrichtungen, wobei die Querstrebe quer gleitend am Hauptkörper montiert ist, wobei die Querstrebe ein Ende aufweist, das mit einem Knopf versehen ist, der ihre Betätigung zum Entriegeln ermöglicht, um das Gleiten des Haupt- und des Sekundärkörpers freizugeben,
- ein Federmittel zum Rückstellen der Querstrebe in Verriegelungsposition,
wobei die Kopfstütze **dadurch gekennzeichnet ist, dass**:
- die Querstrebe mit einer Betätigungszahnstange (30) versehen ist,
- ein Ritzel (31) am Hauptkörper entlang einer Längsachse (36) drehfähig montiert ist, wobei das Ritzel mit der Betätigungszahnstange kämmt, wobei das Ritzel mit einem ersten (32) und einem zweiten (33) Exzenter versehen ist,
- wobei die Klinke mit einem Fenster versehen ist, das eine obere Kante (34) und eine untere Kante (35) aufweist, wobei die Exzenter so positioniert sind, dass:
-- der erste Exzenter an der unteren Kante in Anlage geht, wenn sich die Querstrebe in Verriegelungsposition befindet, um die Klinke in Verriegelungsposition zu blockieren,
-- der zweite Exzenter an der oberen Kante in Anlage geht, wenn die Querstrebe zum Entriegeln betätigt wird, um die Klinke zu beabstanden, um sie in Entriegelungsposition zu bringen.

2. Kopfstütze nach Anspruch 1, **dadurch gekennzeichnet, dass** die Querstrebe (7) in einem ersten und einem zweiten aufeinanderfolgenden Hubteilstück zum Entriegeln betätigt werden kann.

3. Kopfstütze nach Anspruch 2, **dadurch gekennzeichnet, dass**:
- der zweite Exzenter (33) so angeordnet ist, dass er:
-- die Klinke (5) in Entriegelungsposition anordnet, nachdem die Querstrebe (7) auf dem ersten Teilstück betätigt wurde,
-- und die Klinke in dieser Position lässt, wenn die Querstrebe anschließend auf dem zweiten Teilstück betätigt wird,
- die erste Verriegelungsvorrichtung so angeordnet ist, dass sie sich deaktiviert, wenn die Querstrebe am Hubende am Ende des zweiten Teilstücks ankommt.

4. Kopfstütze nach Anspruch 2, **dadurch gekennzeichnet, dass**:
- der zweite Exzenter (33) so angeordnet ist, dass er:
-- die Klinke (5) in Entriegelungsposition anordnet, nachdem die Querstrebe (7) auf dem ersten Teilstück betätigt wurde, um das Einstellen des Sekundärkörpers (4) nach einem teilweisen Gleiten der Querstrebe zu ermöglichen,
-- und die Klinke in ihre Verriegelungsposition zurückbringt, wenn die Querstrebe anschließend am Hubende am Ende des zweiten Teilstücks betätigt wird,
- die erste Verriegelungsvorrichtung so angeordnet ist, dass sie sich deaktiviert, wenn die Querstrebe am Hubende am Ende des zweiten Teilstücks ankommt, wobei das Gleiten des Sekundärkörpers blockiert wird, wenn die Position des Hauptkörpers (3) eingestellt wird.

5. Kopfstütze nach einem der vorstehenden Ansprüche, **dadurch gekennzeichnet, dass** die Exzenter (32, 33) entlang der Drehachse (36) des Ritzels (31) zueinander versetzt sind.

6. Kopfstütze nach einem der vorstehenden Ansprüche, **dadurch gekennzeichnet, dass** die obere (34) und die untere (35) Kante die Form von Flächen aufweisen, die in Bezug auf die Horizontale geneigt sind, um die Reibung zu begrenzen und die Betätigung zum Entriegeln der Klinke (5) zu unterstützen.

7. Kopfstütze nach einem der vorstehenden Ansprüche, **dadurch gekennzeichnet, dass** die Verriegelungszahnstange (6) an einem Organ zur Gleitführung (20) des Sekundärkörpers (4) am Hauptkörper (3) angeordnet ist.

8. Kopfstütze nach einem der vorstehenden Ansprüche, **dadurch gekennzeichnet, dass** die erste Verriegelungsvorrichtung umfasst:
- eine Vielzahl von Verriegelungsrasten (21), die sich vertikal an mindestens einer der Stangen (2) so ausdehnen, dass sie eine gezahnte Stange definieren,
- mindestens einen Verriegelungsvorsprung (22), der in Bezug auf den Hauptkörper (3) zwischen einer Verriegelungsposition, in der sich der Vorsprung in eine der Rastungen einfügt, und einer Entriegelungsposition, in der sich der Vorsprung aus der Rastung zurückzieht, um das Gleiten des Körpers freizugeben, beweglich montiert ist.

## Claims

1. A headrest (1) for a motor vehicle seat, said headrest comprising:
• a frame for mounting on a backrest of said seat, said frame comprising two parallel vertically extending rods (2),
• a main body (3) slidably mounted on said rods so as to be able to adopt a plurality of vertical adjustment positions,
• a first device for locking said main body in the selected adjustment position,
• a secondary body (4) slidably mounted longitudinally on said main body, so that said secondary body can adopt a plurality of longitudinal adjustment positions,
• a second device for locking said secondary body in the selected adjustment position, said device comprising a latch (5) mounted for vertical sliding on said main body between a locking position, in which it cooperates with a locking rack (6) extending longitudinally on said secondary body, and an unlocking position, in which it moves away from said rack to release sliding of said secondary body,
• a common cross-member (7) for unlocking said devices, said cross-member being transversely slidably mounted on said main body, said cross-member having an end provided with a button enabling it to be actuated for unlocking, so as to release the sliding of said main and secondary bodies,
• spring means for returning said crosspiece to the locked position,
said headrest being **characterized in that** :
• said crosspiece is provided with an actuating rack (30),
• a pinion (31) is rotatably mounted on said main body along a longitudinal axis (36), said pinion meshing with said actuating rack, said pinion being provided with a first (32) and a second (33) eccentric,
• said latch is provided with a window having an upper edge (34) and a lower edge (35), said eccentrics being positioned so that :
o said first eccentric rests against said lower edge when said crosspiece is in the locking position, so as to block said latch in the locking position,
o said second eccentric bears against said upper edge when said crosspiece is actuated to unlock, so as to spread said latch to bring it into the unlocked position.

2. Headrest according to claim 1, **characterized in that** the crosspiece (7) can be actuated in unlocking mode along a first and a second successive stroke section.

3. Headrest according to claim 2, **characterized in that**:
• the second eccentric (33) is arranged to :
o place the latch (5) in the unlocked position after the crosspiece (7) has been actuated on said first section,
o and to leave said latch in said position when said crosspiece is subsequently actuated on said second section,
• the first locking device is arranged to deactivate when said crosspiece reaches the end of its travel at the end of said second section.

4. Headrest according to claim 2, **characterized in that**:
• the second eccentric (33) is arranged to :
o place the latch (5) in the unlocked position after the crosspiece (7) has been actuated on said first section, so as to allow adjustment of the secondary body (4) after partial sliding of said crosspiece,
o and to return said latch to its locking position when said crosspiece is then actuated at the end of travel of said second section,
• the first locking device is arranged to deactivate when said crosspiece reaches the end of travel at the end of said second section, the sliding of said secondary body being blocked when the position of the main body (3) is adjusted.

5. Headrest according to any of the preceding claims, **characterized in that** the eccentrics (32, 33) are offset from one another along the axis of rotation (36) of the pinion (31).

6. Headrest according to any one of the preceding claims, **characterized in that** the upper (34) and lower (35) edges are in the form of inclined panels with respect to the horizontal so as to limit friction and facilitate the unlocking actuation of the latch (5).

7. Headrest according to any of the preceding claims, **characterized in that** the locking rack (6) is arranged on a guide member (20) for sliding the secondary body (4) on the main body (3).

8. Headrest according to any of the preceding claims, **characterized in that** the first locking device comprises :
• a plurality of locking notches (21) vertically stepped on at least one of the rods (2) so as to define a notched rod,
• at least one locking projection (22) mounted so as to be movable relative to the main body (3) between a locking position, in which said projection engages in one of said notches, and an unlocking position, in which said projection withdraws from said notch to release sliding of said body.
